(19) Europäisches Patentamt
European Patent Office
Office européen des brevets

(11) **EP 4 156 554 A1**

(12) **EUROPEAN PATENT APPLICATION**

(43) Date of publication:
**29.03.2023 Bulletin 2023/13**

(51) International Patent Classification (IPC):
**H04B 10/2507** (2013.01)  **H04B 10/69** (2013.01)
**H04L 1/00** (2006.01)

(21) Application number: **21199477.7**

(22) Date of filing: **28.09.2021**

(52) Cooperative Patent Classification (CPC):
**H04B 10/6971; H04B 10/2507; H04L 1/0054**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Solutions and Networks Oy
02610 Espoo (FI)**

(72) Inventors:
• **Lefevre, Yannick
3001 Heverlee (BE)**
• **Lanneer, Wouter
2140 Antwerp (BE)**

(74) Representative: **Bryers LLP
Bristol & Bath Science Park
Dirac Crescent, Emerson's Green
Bristol, BS16 7FR (GB)**

(54) **METHOD AND SYSTEM FOR PARAMETER OPTIMIZATION OF AN INFERENCE MODEL**

(57) A method and apparatus for optimizing parameters of an inference model that obtains one or more data values from a signal received from a communication channel and generates an input for a Viterbi-type algorithm are disclosed. The input comprises a one or more data values where each data value is indicative of a likelihood of a sequence of transmitted data values given the obtained one or more data values from the signal. The method comprises receiving a signal via the communication channel, the signal corresponding to a transmission of a first vector of data values, obtaining a second vector of data values comprising one or more data values from the signal, evaluating the inference model on the basis of the second vector, obtaining a third vector of data values based on an output of the inference model and modifying one or more parameters of the inference model based on the first vector and the third vector.

500

510 — Receive a signal via a communication channel corresponding to a transmission of a first vector of data values

520 — Obtain a second vector of data values comprising one or more data values from the signal

530 — Evaluate the inference model on the basis of the second vector

540 — Obtain a third vector of data values based on an output of the inference model

550 — Modify one or more parameters of the inference model based on the first vector and the third vector

Figure 5

**Description**

TECHNICAL FIELD

The present disclosure relates to a system and method for parameter optimization in an inference model. In particular, the methods and systems described herein may be implemented at a receiver in a network to alleviate the effect of inter-symbol interference.

BACKGROUND

In networks such as next-generation passive optical network (PON) systems data transmitted over a channel may suffer from inter-symbol interference (ISI). ISI is caused by symbols interfering with previous and subsequently transmitted symbols. This results in the incorrect decoding of symbols on the receiver side.

ISI may be alleviated using channel equalization techniques. For example, maximum likelihood sequence estimation (MLSE) equalizers may be deployed in PON systems, long-haul optical links, data center optical links, as well as wireless and wireline technologies to alleviate ISI. Single-carrier wireless and wireline technologies may also alleviate ISI using MLSE.

SUMMARY

It is an object of the invention to provide a method for optimizing parameters of an inference model that obtains one or more data values from a signal received from a communication channel and generates an input for a Viterbi-type algorithm

The foregoing and other objects are achieved by the features of the independent claims. Further implementation forms are apparent from the dependent claims, the description and the figures.

These and other aspects of the invention will be apparent from and the embodiment(s) described below.

BRIEF DESCRIPTION OF THE DRAWINGS

For a more complete understanding of the present disclosure, and the advantages thereof, reference is now made to the following descriptions taken in conjunction with the accompanying drawings, in which:

Figure 1 shows a schematic diagram of digital representation of a communication system, according to an example.

Figure 2 is a state diagram for a Viterbi-type algorithm according to an example.

**Error! Reference source not found.** is a block diagram showing a MLSE-based equalizer, according to an example.

Figure 4 is a block diagram showing an apparatus for optimizing parameters of an inference model, according to an example.

Figure 5 shows a block diagram of a method for optimizing parameters of an inference model, according to an example.

DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Next generation PON systems may employ bandwidth-limited reception in combination with digital signals processing (DSP) and equalization, to reduce the cost of receivers. For instance, a 50G PON may be received using 25G optics, whereas a 25G PON may be received using 10G optics. The drawback of this bandwidth limitation is that it may cause significant ISI. In addition, due to the increased line rate speeds, next-generation PON technologies are more strongly affected by chromatic dispersion due to fiber propagation. Even though these systems operate in the O-band, close to the zero dispersion wavelength at 1310 nm, the large frequency content of 50G signals may still create a strong dispersion impact leading to further ISI.

As a result, to recover symbols that are corrupted by ISI and enable reliable communication, these next-generation PON technologies envisage the use of an electrical analog-to-digital converter (ADC) at the receiver, in combination with DSP based channel equalization and forward error correcting (FEC) techniques. The channel equalizer addresses ISI and provides an interference-reduced yet noisy receive symbol sequence to the FEC decoder. The FEC decoder further corrects the errors in the receive sequence using redundancy introduced at the transmitter.

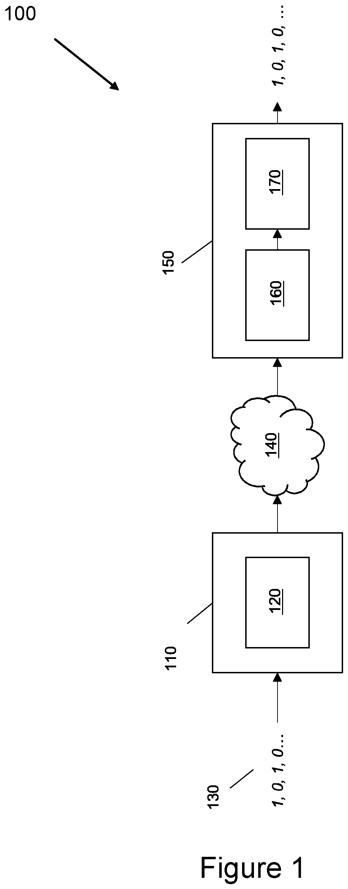

Figure 1 is a simplified schematic diagram showing an apparatus 100, according to an example. The apparatus 100 may be used in conjunction with other methods and systems described herein. The apparatus 100 comprises a digital representation of a PON communication system, according to an example.

The apparatus 100 comprises a transmitter 110. The transmitter 110 comprises a FEC encoder 120. The transmitter receives a stream of data bits 130. The FEC encoder 120 adds redundant data bits to data bits 130. Some PON systems employ low-density parity check (LDPC) codes to encode data. LDPC coding can achieve higher FEC gains than Reed Solomon codes, for example. LDPC codes may also be efficiently decoded while taking into account soft information. An LDPC code may be decoded using log-likelihood ratios (LLRs) or probability estimates of the transmitted bits as opposed to so called hard-decisioned binary estimates. This may be referred to as Soft-input LDPC.

The encoded data bits are digitally modulated onto symbols. According to examples non-return to zero on-off keying (NRZ-OOK) modulation may be used. The digital transmit signal, denoted $x[k]$ may be represented by binary values +I or -I depending on the current (encoded) data bit bk at time step k. For example, a bit value $b_k = 0$ corresponds to x[k]=+I, and a bit value bk = 1 corresponds to x[k]=-I. In some cases higher order modulation formats may be used such as PAM-4, pulse amplitude modulation with four levels, in which $x[k] \in [-1, -\frac{1}{3}, \frac{1}{3}, 1]$.

The transmit signal $x[k]$ is communicated over a channel 140. The channel 140 may be a dispersive and noisy channel. The transmit signal is received at a receiver 150. The receiver 150 receives samples $y[k]$. The samples $y[k]$ are the output of an analog to digital converter (ADC). A dispersive and noisy channel includes the fiber propagation as well as the hardware-induced distortion effects.

The receiver 150 comprises a channel equalizer 160 and FEC decoder 170. The channel equalizer 160 is arranged to process the receive samples $y[k]$ to mitigate the impact of ISI and provide an interference-reduced input to the FEC decoder 170. The input to the FEC decoder 170 may consist of for example hard-decision bit estimates or LLRs. The FEC decoder 170 further corrects errors in the receive sequence $y[k]$. In some cases the FEC decoder 170 is a hard input FEC decoder. In other examples the FEC decoder 170 may be a soft-input decoder. In that case each log likelihood ratio $llr_k$ may be determined as a logarithm of a ratio of the probabilities of the transmitted bit being a 0 given the received samples y to the probability of the transmitted bit being a I given the received samples y:

$$llr_k = \log\left(\frac{P(b_k = 0 \mid y)}{P(b_k = 1 \mid y)}\right)$$

The methods and systems described herein utilise a near-optimal channel equalization approach, corresponding to maximum likelihood sequence estimation (MLSE), or similar equalizer algorithms. An MLSE equalizer selects the most likely symbol sequence from all possible transmit sequences, given the received samples. The computational complexity of this approach grows exponentially with the length of the channel's impulse response.

In some cases a Viterbi algorithm may be utilised to implement efficient MLSE based equalization.

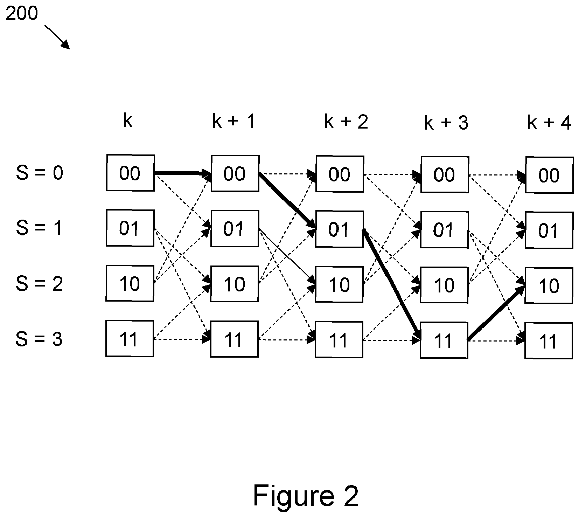

Figure 2 shows a state diagram 200, according to an example. The state diagram 200 shows the use of a Viterbi-type algorithm to determine the most probable path through a trellis of states according to an example.

In the example shown in Figure 2 binary data is transmitted, i.e., x[k] =± 1. An L-tap MLSE equalizer is utilised, where $L$ is the expected number of consecutive transmit symbols that affect any receive sample. Consequently, the receive samples with ISI may be viewed as the output of a finite state machine, and can thus be represented by a $2^{L-1}$-state trellis diagram. This is illustrated in the state diagram 200 in Figure 2 in which L=3. There are $4=2^2$ states. The maximum-likelihood estimate of the transmit symbol sequence may be determined as the most likely path (i.e. with the highest likelihood) through the trellis, given the receive sample sequence y = [y1...yK]:

$$x^* = \underset{x}{\arg\min} \; - \log\left(P(y|x_1...x_K)\right),$$

where $P(y|x_1...x_K)$ is the probability that y is observed given that the sequence x = $[x_1,..,x_K]$ is transmitted, which corresponds to the likelihood that the transmitted sequence x = $[x_1,..,x_K]$ caused the observed sample sequence y.

Viterbi-type algorithms provide an efficient means for performing a trellis search, by sequentially processing all receive samples and pruning unlikely paths at every step. An optimal path through the trellis is computed incrementally using previously computed likelihood metrics.

In Figure 2, for each state s and every time step k, only one of two incoming paths is retained, namely the path with the highest likelihood. The other path is discarded. Each state s at time step k corresponds to one of the $2^{L-1}$ possible values for the $L$-1 transmit symbol sub-sequence $[x_{k-L+2}, ..., x_k]$. For example the state [00] may become [00] or [01] at the next time increment.

The path metric PM[s,k] is defined as a minus log-likelihood of being in state s at time index k of the trellis, given all the received samples up to time index k. This is equivalent to the probability of observing received samples $[y_1, y_2, ..., y_k]$ given that the symbols $[x_{k-L+2}, ..., x_k]$ corresponding to state s at time index k have been transmitted. In other words, the path metric PM[s,k] corresponds to:

$$
\begin{aligned}
PM[s,k] \\
=&- \log\left(P(y_1,...,y_k|x_{k-L+2},...,x_k)\right) \\
=&- \log\left( \sum_{x_{k-L+1} \in \{+1,-1\}} P(y_k|x_{k-L+1},...,x_k)P(y_1,...,y_{k-1}|x_{k-L+1} \right. \\
& \left. ,...,x_{k-1}) \right)
\end{aligned}
$$

The values of $x_{k-L+2}, ..., x_k$ are implicitly specified by the state $s$. The path metric of state $s$ at step $k$ may in approximation be computed recursively from the path metrics of the two possible predecessor states s' (for the two values of $x_{k-L}$) at time index $k$-1 as:

$$PM[s,k] = \underset{s'}{\min}\left[ - \log\left(P(y_k|x_{k-L+1},...,x_k)\right) + PM[s',k-1]\right].$$

In this formula, the minus log of a sum of terms has been approximated as the minimum of the minus logarithms of the terms and the value of $x_{k-L+1}$ is implicitly specified by the state s'. The transition probability, corresponding to the first term of the argument of the min-function, is defined as the branch metric. Hence, in the trellis search $2^L$ branch metrics or transition probabilities are calculated at each timestep k (i.e., for each receive sample $y_k$):

$$BM[s,s',k] =- \log\left(P(y_k|x_{k-L+1},...,x_k)\right).$$

In this formula $P(y_k|x_{k-L+1},...,x_k)$ is the probability that $y_k$ is observed given that the current transmit sequence is $x_{k-L+1},...,x_k$. Each BM corresponds to the transition from a previous state s' corresponding to the sequence $x_{k-L+1},...,x_{k-1}$ to the next state s corresponding to the sequence $x_{k-L+2},...,x_k$. For any state s only the s' states for which the last L-2 symbols of s' are identical to the first L-2 symbols of s are considered. The PMs are thus calculated as:

$$PM[s,k] = \min_{s'}\big[BM[s,s',k] + PM[s',k-1]\big].$$

Examples described herein also refer to extended path metrics defined as:

$$PM'[s,s',k] = BM[s,s',k] + PM[s',k-1] \qquad (I)$$

The extended path metric correspond to the minus log of the likelihood of current state s and previous state s' and is equal to the minus log likelihood before the minimization to calculate regular path metrics:

$$PM[s,k] = \min_{s'}\big[PM'[s,s',k]\big].$$

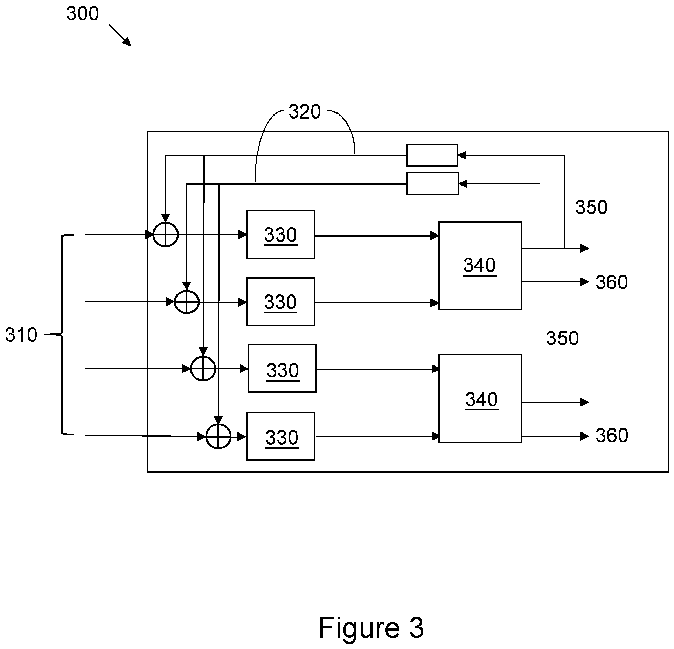

Figure 3 is a block diagram 300 showing MLSE that implements a Viterbi-type algorithm, according to an example. In Figure 3 the algorithm is implemented for $L=2$ (and thus two states). For every time-step, the four corresponding branch metrics 310 are added to two surviving path metrics 320 from the previous iteration. This leads to the four extended path metrics 330, of which pairwise a minimum 340 is calculated, leading to two surviving path metrics. Indices 360 of the minimum path metrics may also be output, stored and/or further processed by the algorithm.

In some examples the Viterbi algorithm outputs hard-decisioned binary data symbol estimations. In other examples, algorithms may calculate data symbol probabilities in a trellis of states. For example, the soft-output Viterbi algorithm (SOVA) or the Bahl-Cocke-Jelinek-Raviv (BCJR) algorithm that output soft values or, in some cases LLRs.

In the Viterbi algorithm only relative differences rather than absolute values of path metrics, extended path metrics and branch metrics are important for calculation. Hence in real implementations these values may be determined up to an offset value, i.e., a constant factor for probabilities or likelihoods, or equivalently a constant offset for log probabilities or log likelihoods.

The performance of a MLSE equalizer such as that shown in Figure 3 is highly affected by the accuracy of the branch metric calculation unit that determines branch metrics 310. A model of the branch metric may be used to determine transition probabilities. For example, one model is based on white additive Gaussian noise where:

$$P(y_k|x_i) = \frac{1}{\sqrt{2\pi\sigma_i^2}}e^{-\frac{(y_k - \mu_i)^2}{2\sigma_i^2}},$$

where $\mu_i$ and $\sigma_i^2$ denote respectively the mean and noise variance of the Gaussian probability distribution function, corresponding to a receive sample given a transmit sequence $x_i$. This may be referred to as the Multi-Gaussian (MG) model, since every transmit sequence $x_i$ is modelled by an independent Gaussian distribution. This model does not take into account, for example, hardware induced distortions. A popular variant considers a FIR channel h, such that $\mu_i = h^T x_i$ Other methods use, for example, look-up tables that implement histogram metrics that are measured at the receiver..

Using full standalone MLSE-based equalizers for channels with many ISI taps, i.e. large $L$, becomes infeasible. The complexity of the MLSE scales exponentially with the number of consecutive transmit symbols L that affect any receive sample, or in other words the length of channel impulse response. For $L \geq 3$, which is the case for many practical channels, the MLSE algorithm becomes excessively complex. The methods and systems described herein use low-complexity MLSE equalizers (e.g. a small number of MLSE taps $L \leq 3$), while achieving good channel equalization performance.

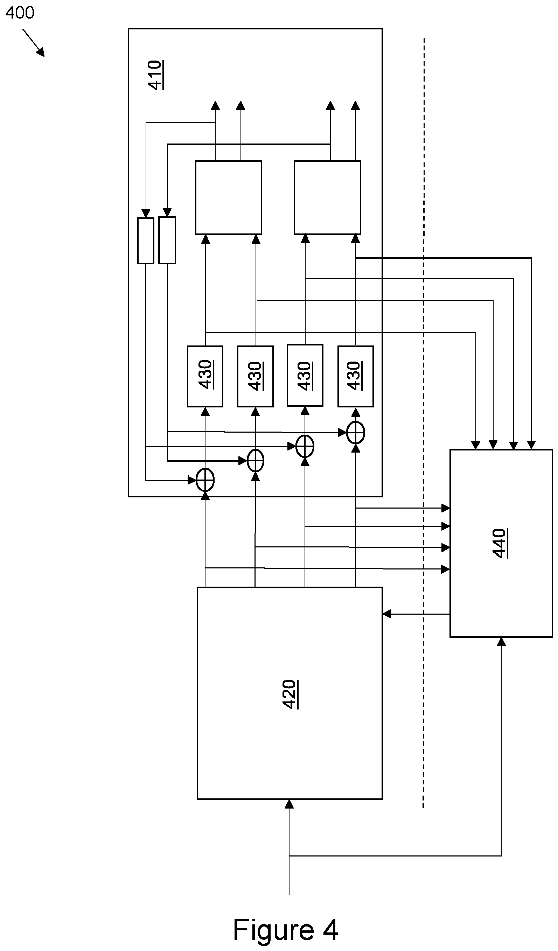

Figure 4 is a block diagram showing an apparatus 400, according to an example. The apparatus 400 may be implemented at a receiver in channel of, for example, a PON network. The apparatus 400 comprises an equalizer 410 configured to implement a Viterbi-type algorithm, similar to the MLSE-based equalizer 300 shown in Figure 3.

The apparatus 400 comprises an inference module 420 that is configured to obtain data values from a received signal. The signal corresponds to a transmission of a first vector of data values and the data values obtained by the inference module 420 from a second vector of data values. The inference module 420 is configured to output branch metrics for the equalizer 410. The equalizer 410 obtains, based on the branch metrics, a third vector of data values comprising extended path metrics 430. According to examples described herein, the inference module 420 may comprise a filter bank such as a Finite Impulse Response (FIR) filter bank, a neural network or any other form of statistical model. In an alternative embodiment, the third vector may comprise the output of the interference model 420.

The apparatus 400 further comprises a parameter optimization module 440. In examples described herein the parameter optimization module 440 is configured to modify parameters of a model implemented by the inference module 420, based on the first vector and third vector of data values such that the inference module 420 outputs branch metrics that maximize likelihoods of true realized states and minimize the likelihoods of non-realized states. In other words, the parameter optimization module 440 is configured to modify parameters of the inference module 420 such that outputs of the inference module 420 optimize the performance of the equalizer 410.

According to an example, obtaining the third vector may comprise processing the output of the inference model 420 by means of the equalizer 410 and providing the processed output to the parameter optimization module 440. In a second case, obtaining the third vector comprises directly providing the output of the inference model to the parameter optimization module 430.

According to examples, modifying parameters of the inference module 420 comprises minimizing a loss function that maximizes the likelihood of the true realized states corresponding to the first vector of transmitted data values, and minimizes the likelihoods of non-realized states. This loss function results in the inference module 420 directly outputting branch metrics that maximize path metrics of the true transmit sequence.

As described in relation to Figure 2, the Viterbi algorithm determines extended path metrics $PM'[s,s',k]$, given by equation (I) above, which correspond to the minus log of the estimated joint likelihood for each current state S and previous state S' at timestep k given all the observed receive samples $y_k$ up to time step k.

An example of a loss function that maximizes the probability of the true realized states corresponding to the transmitted bit sequence, and minimizes the probabilities of non-realized states is the multi-class cross-entropy loss function:

$$L = -\sum_{k}\left(\sum_{s,s'}\delta\left(s = s_{k}^{*}, s' = s_{k-1}^{*}\right)\log\left(\frac{\exp(-PM'[s,s',k])}{\sum_{p,p'}\exp(-PM'[p,p',k])}\right)\right) \quad (2)$$

In equation (2), $s_{k}^{*}$ and $s_{k-1}^{*}$ are the true realized states, corresponding to transmitted bits, at timesteps k and k - 1. The function $\delta$ corresponds to the Dirac delta function: $\delta\left(s = s_{k}^{*}, s' = s_{k-1}^{*}\right) = 1$ if the extended state (s,s') corresponds to the true realized states $\left(s_{k}^{*}, s_{k-1}^{*}\right)$, and zero otherwise. The factor $\sum_{p,p'}\exp(-PM'[p,p',k])$ is a normalization factor that is used to convert the likelihoods represented by the extended path metrics to the joint probabilities of the different states p at time k and p' at time k-1, given the received samples. This conversion from likelihood to probability corresponds to an application of Bayes' rule assuming uniform prior probabilities for the different states.

The loss function (2) minimizes the Kullback-Leibler (KL) divergence between the true states and the estimated probabilities corresponding to the extended path metrics. In other words, minimizing this loss function will make the probabilities estimated by the extended path metrics approximate the desired probability distribution.

In an alternative example, the following loss function may be minimized to obtain parameters of for the inference module 420:

$$L = -\sum_{K}\left(\sum_{s}\delta(s = s_{k})\log\left(\frac{\exp(-PM[s,k])}{\sum_{p}\exp(-PM[p,k])}\right)\right)$$

This optimization can be done in a similar way, but is more difficult to. In other examples, different loss functions incorporating the extended path metrics may be used. In another example, the loss function may incorporate the branch metrics.

According to examples, the parameter optimization module 440 executes a procedure to determine parameters for the inference module 420 to calculate branch metrics that minimize the loss function. In one example, stochastic gradient descent may be used to obtain parameters.

In an example, the inference module 420 may contain a bank of FIR filters, one filter for each branch metric.

In this example, the branch metric calculation for every extended state (s,s') is:

$$BM[s,s',k] = w_{s,s'}^T y_k + b_{s,s'} \qquad (3)$$

In equation (3), $y_k = [y_{k-N+1+\Delta},...,y_{k+\Delta}]$ is the current observation of N received samples with a delay parameter $\Delta$; and $w_{s,s'} = [w_{s,s'}^1,...,w_{s,s'}^N]$ and $b_{s,s'}$ are the filter taps and bias tap respectively corresponding to state (s,s'). Bias taps may be considered a FIR tap to which the input sample is a unit-valued constant. The derivative of the loss function with respect to the coefficient $w_{s,s'}^i$ i.e., the i-th FIR tap of state (s,s'), for one observation of N receive samples $y_k$ is calculated as follows:

$$\frac{\partial L}{\partial w_{s,s'}[i]}$$

$$= \left( \delta(s = s_k^*, s' = s_{k-1}^*) - \frac{\exp(-PM[s,s',k])}{\sum_{p,p'}\exp(-PM[p,p',k])} \right)$$

$$\frac{\partial(BM[s,s',k] + PM[s',k-1])}{\partial w_{s,s'}[i]}$$

To evaluate this gradient, the derivative of the previous path metric PM[s',k - 1] can be neglected to reduce complexity:

$$\frac{\partial(BM[s,s',k] + PM[s',k-1])}{\partial w_{s,s'}[i]} \approx \frac{\partial(BM[s,s',k])}{\partial w_{s,s'}[i]} = y_k$$

With this approximation, every iterative update of the stochastic gradient descent algorithm of the parameters comprises the following computations:

$$w_{s,s'} = w_{s,s'} - \mu e_k^{s,s'} y_k$$

$$b_{s,s'} = b_{s,s'} - \mu e_k^{s,s'} y_k$$

with an error

$$e_k^{s,s'} = \delta(s = s_k^*, s' = s_{k-1}^*) - \frac{\exp(-PM[s,s',k])}{\sum_{p,p'}\exp(-PM[p,p',k])}.$$

Alternatively, the derivative of the previous path metrics may also be taken into account. This requires taking previous branch metrics and older received samples, which also therefore requires more memory usage. In principle, any number of *M* previous branch metrics may be taken into account for derivative and update computations.

The methods and systems described herein are not specific to a FIR filter-bank structure. Alternative structures can be trained in a similar manner. For instance a single feed forward (FFE) structure followed by Gaussian branch metric estimations may also be trained in a similar way by updating the model parameters (FFE coefficients and branch metrics parameters) according to their derivative of the loss functions. Similarly, a neural network may be trained to calculate the branch metric inputs to the MLSE equalizer.

The update rules are described under the assumption that the true transmitted sequences $S_k^*, S_{k-1}^*$ are known. According to examples, this may be achieved using a pilot-based operation, in which a training sequence is transmitted by the transmitter that is a priori known by the receiver.

Alternatively, a blind or decision directed training procedure may be employed. For example a decision device may be used to estimate the transmitted sequence forming the first vector of data values. The decision device may operate on the output of the MLSE unit. The parameters of the inference model are then iteratively updated in a closed loop with the MLSE unit, leading to increasingly better estimation performance. Correct initialization of the parameters of the inference model is crucial for successful blind startup. Other alternatives could be considered, like applying a decision device directly on the calculated branch metrics, or on the output of an external equalizer. In other words, in this scheme, the equalizer is first used to estimate the transmitted bit sequence, and this bit sequence is then used to further update the coefficients of the equalizer.

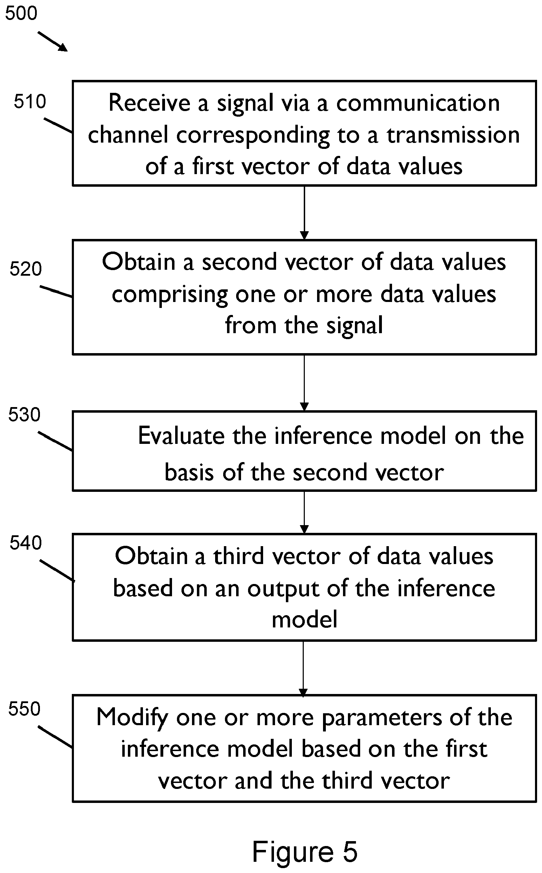

Figure 5 is a block diagram of a method 500 for optimizing parameters of an inference model, according to an example. The inference model may be implemented by the inference module 420 shown in Figure 4. The inference model obtains one or more data values from a signal received from a communication channel and generates an input for a Viterbi-type algorithm. The input comprises one or more data values where each data value is indicative of a likelihood of a sequence of transmitted data values given the obtained one or more data values. The input may comprise a single data value.

At block 510 the method comprises receiving a signal via the communication channel, the signal corresponding to a transmission of a first vector of data values. At block 520 a second vector of data values comprising one or more data values from the signal is obtained. At block 530, the inference model is evaluated on the basis of the second vector. At block 540 a third vector of data values is obtained based on an output of the inference model. At block 550 one or more parameters of the inference model are modified based on the first vector and the third vector.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors. Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for optimizing parameters of an inference model that obtains one or more data values from a signal received from a communication channel and generates an input for a Viterbi-type algorithm, the input comprising one or more data values, each data value indicative of a likelihood of a sequence of transmitted data values given the obtained one or more data values from the signal, the method comprising:

receiving a signal via the communication channel, the signal corresponding to a transmission of a first vector of data values;
obtaining a second vector of data values comprising one or more data values from the signal;
evaluating the inference model on the basis of the second vector;
obtaining a third vector of data values based on an output of the inference model; and
modifying one or more parameters of the inference model based on the first vector and the third vector.

2.  The method of claim 1 wherein each data value of the third vector of data values comprises a branch metric for the Viterbi-type algorithm.

3.  The method of claim 1 wherein obtaining a third vector, comprises:

generating an input for the Viterbi-type algorithm based on the evaluation of the inference model;
evaluating the Viterbi-type algorithm based on the input; and
generating the third vector of data values based on the evaluation of the Viterbi-type algorithm.

4.  The method of claim 3, wherein each data value of the third vector of data values comprises an extended path metric of the Viterbi algorithm.

5.  The method of claim 1 to 4, wherein modifying the one or more parameters of the inference model comprises minimizing a loss function.

6.  The method of claim 5, wherein the loss function maximizes an extended path metric corresponding to a transmitted sequence of data values and minimises extended path metrics corresponding to non-transmitted sequences of data values.

7.  The method of claim 5, wherein the loss function comprises a multi-class cross-entropy loss function.

8.  The method of claim 5, wherein modifying the one or more parameters of the inference model comprises applying stochastic gradient descent to the loss function.

9.  The method of claim 1 wherein the inference model comprises a neural network, finite impulse response (FIR) filter bank and/or a feed forward equalizer (FFE).

10. The method of claim 1 comprising estimating the first vector of data values based on an output of a decision device, wherein the decision device is applied based on data values obtained from the signal.

11. The method of claim 1, wherein the communication channel comprises a communication channel in a passive optical network (PON), a long-haul optical link, a data centre optical link, a wireless link or a wireline link.

12. An apparatus comprising:

an inference module to implement an inference model that obtains one or more data values from a signal received from a communication channel and generates an input for a Viterbi-type algorithm, the input comprising one or more data values, each data value indicative of a likelihood of a sequence of transmitted data values given the obtained one or more data values from the signal;
a receiver configured to receive a signal via the communication channel, the signal corresponding to a transmission of a first vector of data values, the receiver configured to obtain a second vector of data values comprising one or more data values from the signal;
a channel equalizer configured to implement the Viterbi-type algorithm;
a parameter optimization module configured to:

obtain a third vector of data values based on an output of the inference module, the output obtained from an evaluation of the inference module on the basis of the second vector; and
modify one or more parameters of the inference model based on the first vector and the third vector.

**13.** The apparatus of claim 12 wherein the channel equalizer is a hard output equalizer.

**14.** The apparatus of claim 13 wherein the channel equalizer is a maximum likelihood sequence estimation (MLSE) equalizer.

**15.** The apparatus of claim 12, wherein the channel equalizer is a soft output equalizer.

Figure 1

200

| | k | k + 1 | k + 2 | k + 3 | k + 4 |
|---|---|---|---|---|---|

S = 0   00      00      00      00      00

S = 1   01      01      01      01      01

S = 2   10      10      10      10      10

S = 3   11      11      11      11      11

Figure 2

Figure 3

400

Figure 4

500

510 ⟍
┌─────────────────────────────────────────┐
│ Receive a signal via a communication     │
│ channel corresponding to a transmission  │
│ of a first vector of data values         │
└─────────────────────────────────────────┘

520 ⟍
┌─────────────────────────────────────────┐
│ Obtain a second vector of data values    │
│ comprising one or more data values       │
│ from the signal                          │
└─────────────────────────────────────────┘

530 ⟍
┌─────────────────────────────────────────┐
│ Evaluate the inference model on the      │
│ basis of the second vector               │
└─────────────────────────────────────────┘

540 ⟍
┌─────────────────────────────────────────┐
│ Obtain a third vector of data values     │
│ based on an output of the inference      │
│ model                                    │
└─────────────────────────────────────────┘

550 ⟍
┌─────────────────────────────────────────┐
│ Modify one or more parameters of the     │
│ inference model based on the first       │
│ vector and the third vector              │
└─────────────────────────────────────────┘

Figure 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/185613 A1 (AGAZZI OSCAR E [US] ET AL) 23 July 2009 (2009-07-23) | 1,3,9-15 | INV. H04B10/2507 H04B10/69 H04L1/00 |
| A | * paragraphs [0005] – [0007], [0050] – [0085]; figure 3 * | 2,4-8 | |
| A | WO 02/067444 A1 (COMSYS COMM & SIGNAL PROC LTD [IL]; KLEINERMAN ALEXANDER [IL] ET AL.) 29 August 2002 (2002-08-29) * page 8, line 1 – page 29, line 24; figures 2,3 * | 1-15 | |

-----

-----

TECHNICAL FIELDS
SEARCHED        (IPC)

H04B
H04L

The present search report has been drawn up for all claims

| Place of search | Date of completion of the search | Examiner |
|---|---|---|
| Munich | 28 March 2022 | Koch, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 9477

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2022

| Patent document cited in search report | | Publication date | Patent family member(s) | | Publication date |
|---|---|---|---|---|---|
| US 2009185613 | A1 | 23-07-2009 | NONE | | |
| WO 02067444 | A1 | 29-08-2002 | EP | 1362428 A1 | 19-11-2003 |
| | | | US | 6470047 B1 | 22-10-2002 |
| | | | WO | 02067444 A1 | 29-08-2002 |

For more details about this annex : see Official Journal of the European Patent Office, No. 12/82